# EUROPEAN PATENT SPECIFICATION

(11) **EP 4 212 418 B1**
(45) Date of publication and mention of the grant of the patent: **14.02.2024**
(21) Application number: 22212505.6
(22) Date of filing: 09.12.2022
(51) Int. Cl.: B62J 6/04, B62J 17/00

(54) **STRADDLED VEHICLE**
GRÄTSCHSITZFAHRZEUG
VÉHICULE À SELLE

(30) Priority: 14.01.2022 JP 2022004571
(43) Date of publication of application: 19.07.2023
(73) Proprietor: Yamaha Hatsudoki Kabushiki Kaisha, Iwata-shi, Shizuoka 438-8501 (JP)
(72) Inventor: Terada, Hirohisa, Iwata-shi, Shizuoka (JP)
(74) Representative: Grünecker Patent- und Rechtsanwälte PartG mbB

(56) References cited:
- EP-A1- 2 463 184
- EP-A1- 2 610 151
- EP-A1- 3 670 310
- CN-A- 111 038 627
- CN-A- 113 815 753

## Description

The present invention relates to a straddled vehicle.

There is a type of straddled vehicle that includes a taillight and an auxiliary cover disposed in the surroundings of the taillight. For example, JP 2011-46328 A describes a motorcycle that a lens of a taillight is fixed to a base member of the taillight by a fastening portion. Besides, an auxiliary cover is attached to a rear-side vehicle body cover by screws so as to overlap with the fastening portion.

In the motorcycle described above, the auxiliary cover is detached from the rear-side vehicle body cover by removing the screws. This enables access to the fastening portion. Then, the lens is detached from the base member by releasing the fastening portion. This enables replacement of a bulb. Besides, JP 2011-46328 A describes that the fastening portion is hidden by the auxiliary cover, whereby the motorcycle is enhanced in maintenance performance and external aesthetic.

In the motorcycle described above, the auxiliary cover is fixed to the rear-side vehicle body cover by the screws inserted forward into the auxiliary cover. Because of this, the heads of the screws are visible and stand out in a vehicle rear view. This deteriorates the external aesthetic of the vehicle.

It can be assumed to fix the auxiliary cover by screws inserted sidewards into the auxiliary cover so as not to deteriorate the external aesthetic of the vehicle by the screws. This structure makes it difficult to see the heads of the screws in a vehicle rear view, whereby the external aesthetic of the vehicle is enhanced. However, in this case, the auxiliary cover is required to be provided with bosses for receiving the screws on the inner side thereof. The bosses are disposed on the inner side of the auxiliary cover so as to extend in the right-and-left direction in alignment with the orientation of the screws. When the auxiliary cover is thus provided with the bosses on the inner side thereof, a space for disposing the taillight lens is made small. Because of this, increase in size of the taillight lens is made difficult.

The document CN 113 815 753 A discloses the features of the preamble of claim 1.

It is an object of the present invention to provide a straddled vehicle that can enhance the external aesthetic of a straddled vehicle, and simultaneously, increase the size of a taillight lens. According to the present invention said object is solved by a straddled vehicle having the features of independent claim 1. Preferred embodiments are laid down in the dependent claims.

A straddled vehicle according to an aspect of the present teaching includes a rear cover, a taillight housing, a bulb, a taillight lens, a lens fastening portion, and an auxiliary cover. The rear cover is disposed in a vehicle rear portion. The taillight housing is attached to the rear cover. The bulb is attached to the taillight housing. The taillight lens is attached to the taillight housing. The taillight lens covers the bulb. The taillight lens causes light emitted from the bulb to transmit therethrough. The lens fastening portion fixes the taillight lens to the taillight housing. The auxiliary cover is disposed at least partially lateral to the taillight lens in a vehicle rear view. The auxiliary cover covers the lens fastening portion. The rear cover includes a side cover. The side cover is disposed lateral to the auxiliary cover in the vehicle rear view. The auxiliary cover includes a lock portion. The lock portion is disposed lateral to the taillight lens. The auxiliary cover is attached to the rear cover by locking the lock portion to the side cover.

In the straddled vehicle according to the present aspect, the lock portion is locked to the side cover, whereby the auxiliary cover is fixed to the rear cover. Because of this, unlike a configuration of fixing the auxiliary cover by screws, bosses for such screws are not herein required to be provided on the inner side of the auxiliary cover. Accordingly, a space for disposing the taillight lens is enlarged. As a result, increase in size of the taillight lens is enabled.

The side cover may include a pin member protruding toward the auxiliary cover. The auxiliary cover may be attached to the side cover by locking the lock portion to the pin member. The lock portion may include a lock groove. The lock groove may be locked onto the pin member. In this case, the lock groove is locked onto the pin member, whereby the auxiliary cover is fixed to the side cover.

The taillight lens may have a vertically elongated shape. Suppose fixation by screws is employed. When the taillight lens herein has the vertically elongated shape, bosses for screws become likely to interfere with the taillight lens. Therefore, increase in size of the taillight lens is made difficult for avoiding interference between the taillight lens and the bosses for screws. By contrast, fixation by the lock portion is employed in the straddled vehicle according to the present aspect; hence, increase in size of a taillight unit is enabled even when the taillight lens has the vertically elongated shape.

The taillight lens may have a vertically elongated oval shape. Suppose fixation by screws is employed. When the taillight lens herein has the vertically elongated oval shape, bosses for screws become likely to interfere with the taillight lens. Therefore, increase in size of the taillight lens is made difficult for avoiding interference between the taillight lens and the bosses for screws. By contrast, fixation by the lock portion is employed in the straddled vehicle according to the present aspect; hence, increase in size of the taillight unit is enabled even when the taillight lens has the vertically elongated oval shape.

The lock portion may be located at an identical height to portion of the taillight lens. Suppose fixation by screws is employed. When bosses for screws are herein located at identical heights to portion of the taillight lens, the bosses for screws become likely to interfere with the taillight lens. Therefore, increase in size of the taillight lens is made difficult for avoiding interference between the taillight lens and the bosses for screws. By contrast, fixation by the lock portion is employed in the straddled vehicle according to the present aspect; hence, increase in size of the taillight unit is enabled even when the lock portion is located at the identical height to portion of the taillight lens.

The straddled vehicle may further include a screw. The screw may be disposed on an upper side than the lock portion. The screw may fix the auxiliary cover to the rear cover. In this case, the auxiliary cover is made detachable by removing the screw and then unlocking the lock portion. Besides, even when the screw is removed, the lock portion is still locked to the side cover; hence, the auxiliary cover is unlikely to fall. Because of this, detachment of the auxiliary cover is made easy.

The straddled vehicle may further include a seat. The seat may be disposed above the taillight lens in the vehicle rear view. The seat may overlap with the screw in an axial direction of the screw. In this case, unless the seat is opened, access to the screw is prevented and therefore the auxiliary cover cannot be detached. Accordingly, anti-theft performance is enhanced.

The auxiliary cover may include a left lateral portion, a right lateral portion, a top portion, and a bottom portion. The left lateral portion may be disposed on the left of the taillight lens in the vehicle rear view. The right lateral portion may be disposed on the right of the taillight lens in the vehicle rear view. The top portion may be disposed above the taillight lens in the vehicle rear view. The top portion may continue to the left lateral portion and the right lateral portion. The bottom portion may be disposed below the taillight lens in the vehicle rear view. The bottom portion may continue to the left lateral portion and the right lateral portion. In this case, the circumference of the auxiliary cover has an entirely continuous shape; hence, the auxiliary cover is enhanced in strength.

The straddled vehicle may further include an attachment portion for a license plate. The attachment portion for the license plate may be disposed below the taillight lens in the vehicle rear view. The rear cover may include a bottom surface disposed below the taillight lens. The auxiliary cover may include the bottom portion disposed below the taillight lens in the vehicle rear view. The bottom portion of the auxiliary cover may be disposed rearwardly away from the bottom surface of the rear cover through a gap. The light emitted from the bulb may transmit through the gap to illuminate the attachment portion. The lock portion may be located lateral to the gap. In this case, the lock portion is disposed lateral to the gap formed by the bottom portion of the auxiliary cover; hence, the other portion of the auxiliary cover can be made compact. Incidentally, the light is emitted to a limited range to illuminate the license plate; hence, the lock portion has a lesser impact on the light emission range.

### BRIEF DESCRIPTION OF THE DRAWINGS

FIG. 1 is a side view of a straddled vehicle.
FIG. 2 is a rear view of the straddled vehicle.
FIG. 3 is an enlarged rear view of a rear portion of the straddled vehicle.
FIG. 4 is a rear view of the rear portion of the straddled vehicle from which an auxiliary cover is detached.
FIG. 5 is a perspective view of the rear portion of the straddled vehicle from which a taillight lens is detached.
FIG. 6 is a perspective view of the auxiliary cover.
FIG. 7 is a perspective view of the auxiliary cover.
FIG. 8 is a view of the inner surface of a left side cover.
FIG. 9 is a view of the inner surface of the left side cover and that of the auxiliary cover.
FIG. 10 is a view of the inner surface of a right side cover.
FIG. 11 is a view of the inner surface of the right side cover and that of the auxiliary cover.
FIG. 12 is a top view of the rear portion of the straddled vehicle.
FIG. 13 is a view of the rear portion of the straddled vehicle obliquely seen from below.

### DETAILED DESCRIPTION OF EMBODIMENTS

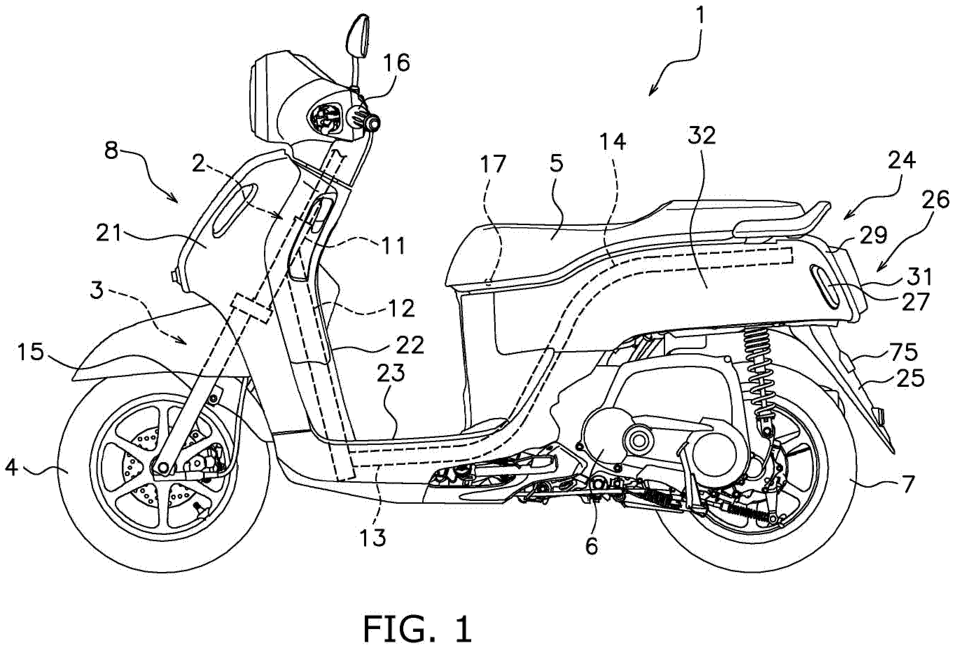

A straddled vehicle 1 according to an embodiment will be hereinafter explained with reference to drawings. FIG. 1 is a side view of the straddled vehicle 1. In the present embodiment, the straddled vehicle 1 is a scooter. As shown in FIG. 1, the straddled vehicle 1 includes a vehicle body frame 2, a steering device 3, a front wheel 4, a seat 5, a power unit 6, a rear wheel 7, and a vehicle body cover 8. It should be noted that in the following explanation, front, rear, right, and left directions are defined as indicating front, rear, right, and left directions seen from a driver seated on the seat 5. Accordingly, a front-and-rear direction of the vehicle extends from the rear of the vehicle to the front of the vehicle and vice versa. A right-and-left direction of the vehicle extends from the left of the vehicle to the right of the vehicle and vice versa. The right-and-left direction of the vehicle is synonymous to the width direction of the vehicle. An up-and-down direction of the vehicle extends from bottom-up the vehicle and vice versa. The up-and-down direction of the vehicle is synonymous to the vertical direction of the vehicle.

The vehicle body frame 2 includes a head pipe 11, a down frame 12, a lower frame 13, and a seat frame 14. The head pipe 11 is disposed in the middle of the straddled vehicle 1 in a right-and-left direction. The head pipe 11 extends forward and downward. The down frame 12 extends downward from the head pipe 11. The lower frame 13 extends rearward from a lower portion of the down frame 12. The seat frame 14 extends rearward and upward from a rear portion of the lower frame 13.

The steering device 3 is supported by the head pipe 11 so as to be turnable. The steering device 3 supports the front wheel 4 such that the front wheel 4 is rotatable. The steering device 3 includes a front fork 15 and a handle member 16. The front fork 15 is supported by the head pipe 11 so as to be turnable. The front wheel 4 is supported by the front fork 15 so as to be rotatable. The handle member 16 is connected to the front fork 15.

The seat 5 is disposed behind the head pipe 11. The seat 5 is disposed above the seat frame 14. The seat 5 is supported by the seat frame 14 through a stay not shown in the drawings. The seat 5 is supported at a front portion thereof by a shaft 17 extending in a width direction so as to be pivotable. When the seat 5 is pivoted about the shaft 17, a rear portion of the seat 5 is circularly moved in an up-and-down direction. The power unit 6 is disposed below the seat 5. The power unit 6 includes an engine. Alternatively, the power unit 6 may include an electric motor. The rear wheel 7 is supported by the power unit 6 so as to be rotatable.

The vehicle body cover 8 includes a front cover 21, a leg shield 22, a foot board 23, and a rear cover 24. The front cover 21 and the leg shield 22 are disposed in a front portion of the straddled vehicle 1. The front cover 21 is disposed in front of the head pipe 11 and the down frame 12. The leg shield 22 is disposed behind the head pipe 11 and the down frame 12.

The foot board 23 is disposed between the leg shield 22 and the rear cover 24. The foot board 23 extends rearward from the lower end of the leg shield 22. The foot board 23 is disposed below and in front of the seat 5. The foot board 23 has a flat shape in a right-and-left direction. However, the foot board 23 may include a center tunnel portion protruding upward from the middle thereof located in the right-and-left direction.

The rear cover 24 is disposed in a rear portion of the straddled vehicle 1. The rear cover 24 is disposed below the seat 5. The rear cover 24 is disposed above the engine and the rear wheel 7. A rear fender 25 is attached to the rear cover 24. The rear fender 25 is disposed above and behind the rear wheel 7.

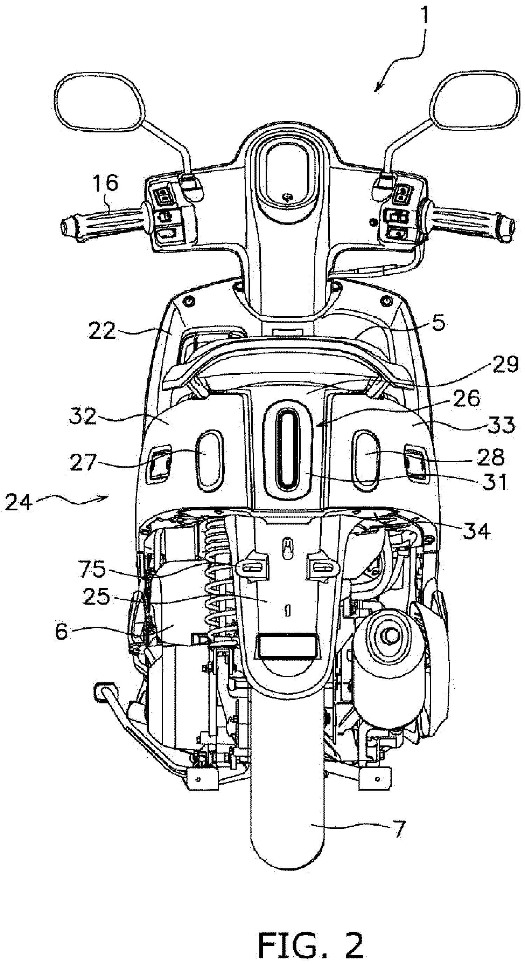

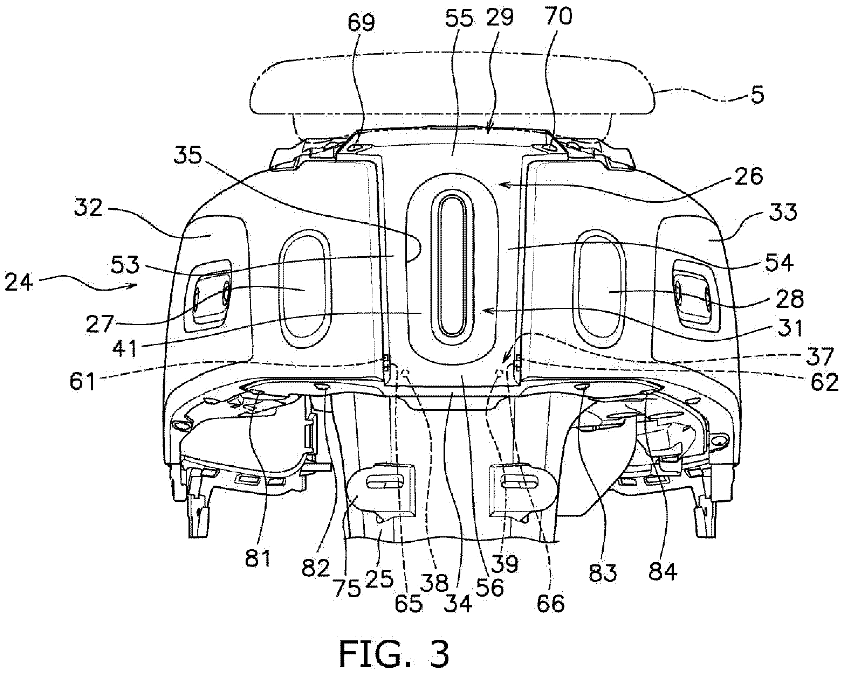

FIG. 2 is a rear view of the straddled vehicle 1. FIG. 3 is an enlarged rear view of the rear portion of the straddled vehicle 1. It should be noted that FIG. 3 omits illustration of the seat 5. As shown in FIGS. 2 and 3, the straddled vehicle 1 includes a taillight unit 26, rear flashers 27 and 28, and an auxiliary cover 29. The taillight unit 26 and the rear flashers 27 and 28 are attached to the rear cover 24. The rear flashers 27 and 28 includes a left rear flasher 27 and a right rear flasher 28. The taillight unit 26 includes a taillight lens 31. In a vehicle rear view, the seat 5 is disposed above the taillight lens 31 and the auxiliary cover 29.

In the vehicle rear view, the taillight lens 31 is disposed between the left rear flasher 27 and the right rear flasher 28 in the right-and-left direction. In the vehicle rear view, the left rear flasher 27 is disposed on the left of the taillight lens 31. In the vehicle rear view, the right rear flasher 28 is disposed on the right of the taillight lens 31.

Each of the left and right rear flashers 27 and 28 has a vertically elongated oval shape. The taillight lens 31 has a vertically elongated oval shape. In the vehicle rear view, the taillight lens 31 is larger than each of the left and right rear flashers 27 and 28 in the up-and-down direction. In the vehicle rear view, the taillight lens 31 is larger than each of the left and right rear flashers 27 and 28 in the right-and-left direction.

The rear cover 24 includes a left side cover 32, a right side cover 33, and a bottom cover 34. In the vehicle rear view, the left side cover 32 is disposed on the left of the auxiliary cover 29. In the vehicle rear view, the right side cover 33 is disposed on the right of the auxiliary cover 29. The left side cover 32 includes a left hole. The left rear flasher 27 is disposed to be exposed through the left hole. The right side cover 33 includes a right hole. The right rear flasher 28 is disposed to be exposed through the right hole.

The bottom cover 34 is disposed below the left side cover 32 and the right side cover 33. The bottom cover 34 is provided as a member separated from the left side cover 32 and the right side cover 33. The bottom cover 34 is fixed to the left side cover 32 and the right side cover 33 by screws.

In the vehicle rear view, the auxiliary cover 29 is disposed between the left side cover 32 and the right side cover 33 in the right-and-left direction. In the vehicle rear view, the auxiliary cover 29 is disposed in the entirety of the surroundings (i.e., the upper, lower, right, and left sides) of the taillight lens 31. The auxiliary cover 29 includes a middle hole 35. The taillight lens 31 is disposed through the middle hole 35.

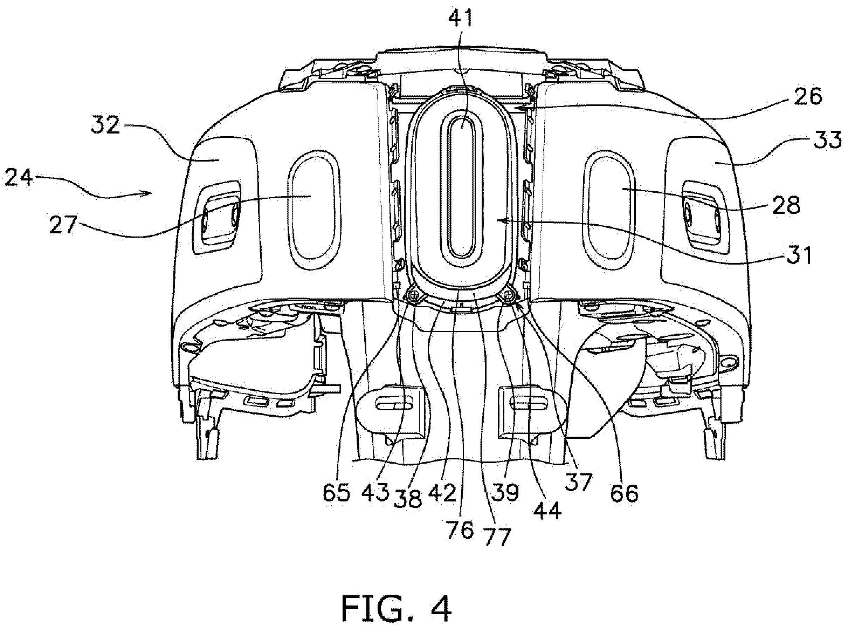

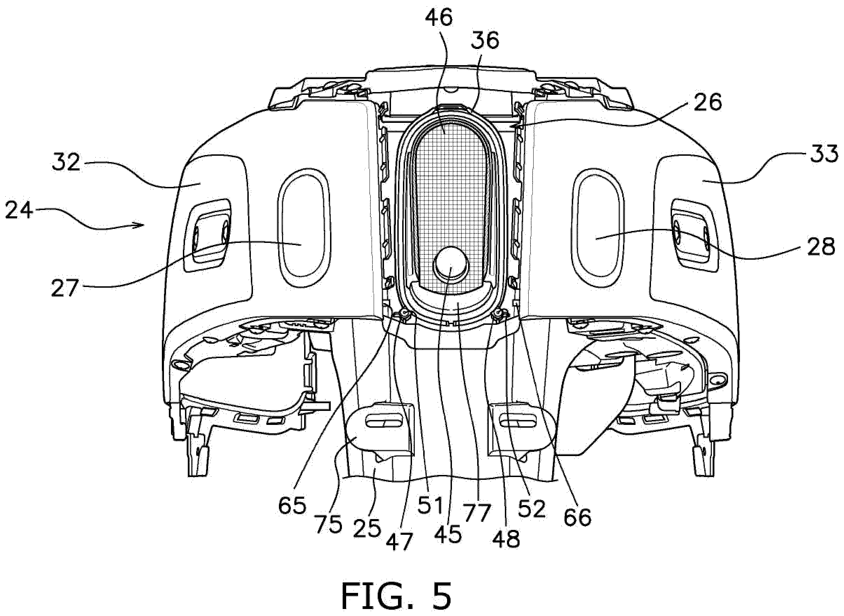

FIG. 4 is a rear view of the rear portion of the straddled vehicle 1 from which the auxiliary cover 29 is detached. FIG. 5 is a perspective view of the rear portion of the straddled vehicle 1 from which the taillight lens 31 is detached. As shown in FIGS. 4 and 5, the taillight unit 26 includes a taillight housing 36 and a lens fastening portion 37. The taillight housing 36 is attached to the rear cover 24. In the vehicle rear view, the taillight housing 36 is disposed in part between the left side cover 32 and the right side cover 33. The taillight housing 36 is attached to the left side cover 32 and the right side cover 33.

As shown in FIG. 4, the lens fastening portion 37 fixes the taillight lens 31 to the taillight housing 36. The lens fastening portion 37 includes a first screw 38 and a second screw 39. The first and second screws 38 and 39 are disposed in alignment in the right-and-left direction. The first and second screws 38 and 39 fix the taillight lens 31 to the taillight housing 36 in a detachable manner. The first and second screws 38 and 39 are disposed in a bottom portion of the taillight lens 31.

As shown in FIG. 4, the taillight lens 31 includes a lens body 41, an edge portion 42, a first fixation portion 43, and a second fixation portion 44. The lens body 41 is exposed to the outside through the middle hole 35 of the auxiliary cover 29. The edge portion 42 is disposed in the surroundings of the lens body 41. The first and second fixation portions 43 and 44 protrude from a bottom portion of the edge portion 42. In the vehicle rear view, the first fixation portion 43 protrudes leftward and downward. The first fixation portion 43 is penetrated by the first screw 38. In the vehicle rear view, the second fixation portion 44 protrudes rightward and downward. The second fixation portion 44 is penetrated by the second screw 39.

As shown in FIG. 5, the taillight unit 26 includes a bulb 45. The bulb 45 is attached to the taillight housing 36. The taillight housing 36 includes a reflector 46. The reflector 46 rearwardly reflects light emitted from the bulb 45. The taillight lens 31 covers the bulb 45 and causes the light emitted from the bulb 45 to transmit therethrough.

The taillight housing 36 includes a first boss 47 and a second boss 48. The first boss 47 is provided with a first screw hole 51. The first screw hole 51 causes the first screw 38 to be screwed therein. The taillight lens 31 is fixed at the first fixation portion 43 to the first boss 47 by the first screw 38. The second boss 48 is provided with a second screw hole 52. The second screw hole 52 causes the second screw 39 to be screwed therein. The taillight lens 31 is fixed at the second fixation portion 44 to the second boss 48 by the second screw 39. Each of the first and second screw holes 51 and 52 extends in a back-and-forth direction. Each of the first and second screws 38 and 39 is disposed such that the axis thereof is oriented in the back-and-forth direction.

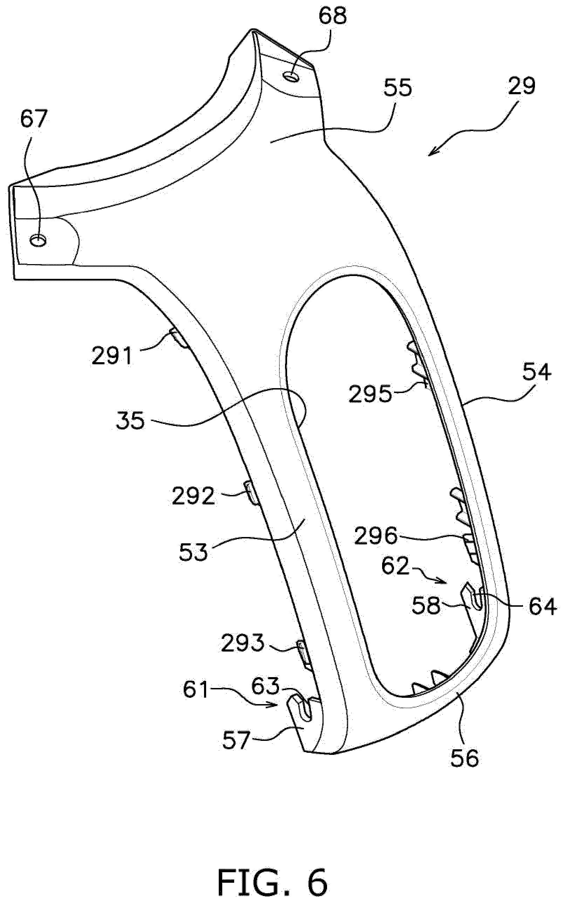

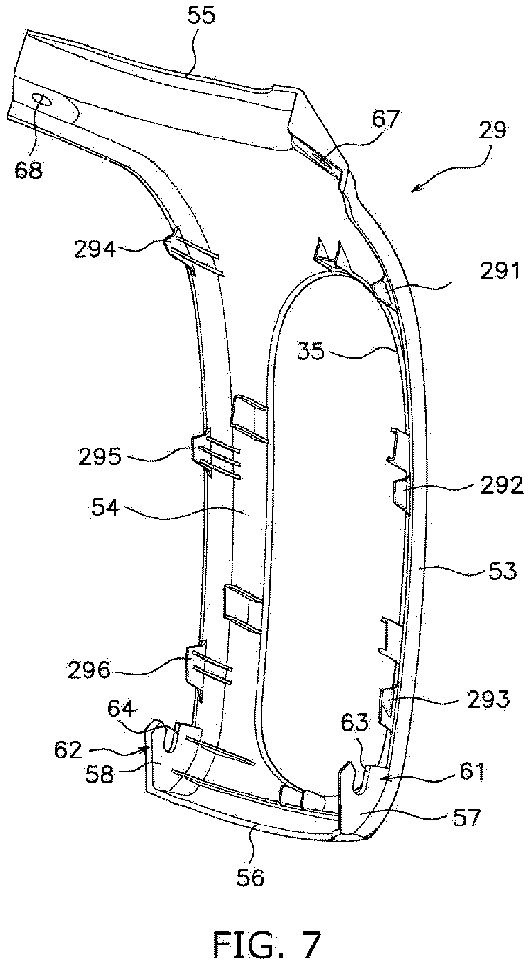

FIGS. 6 and 7 are perspective view of the auxiliary cover 29. The auxiliary cover 29 is provided as a member separated from the rear cover 24. The auxiliary cover 29 is attached to the rear cover 24 in a detachable manner. As shown in FIG. 3, the auxiliary cover 29 covers the lens fastening portion 37. In the vehicle rear view, the auxiliary cover 29 overlaps with the lens fastening portion 37.

The auxiliary cover 29 includes a left lateral portion 53, a right lateral portion 54, a top portion 55, and a bottom portion 56. In the vehicle rear view, the left lateral portion 53 is disposed on the left of the taillight lens 31. In the vehicle rear view, the right lateral portion 54 is disposed on the right of the taillight lens 31. In the vehicle rear view, the top portion 55 is disposed above the taillight lens 31. The top portion 55 continues to the left and right lateral portions 53 and 54. In the vehicle rear view, the bottom portion 56 is disposed below the taillight lens 31. The bottom portion 56 continues to the left and right lateral portions 53 and 54. The circumference of the auxiliary cover 29 has an entirely continuous shape.

The auxiliary cover 29 includes a left lateral surface 57 and a right lateral surface 58. The left lateral surface 57 protrudes rearward from the left lateral end of the bottom portion 56. The right lateral surface 58 protrudes rearward from the right lateral end of the bottom portion 56. The auxiliary cover 29 includes lock portions 61 and 62. The lock portions 61 and 62 are locked to the side covers 32 and 33, whereby the auxiliary cover 29 is attached to the rear cover 24.

The lock portions 61 and 62 includes a first lock portion 61 and a second lock portion 62. The first lock portion 61 is disposed on the left of the taillight lens 31. The second lock portion 62 is disposed on the right of the taillight lens 31. The first lock portion 61 is provided in the left lateral surface 57 of the auxiliary cover 29. The second lock portion 62 is provided in the right lateral surface 58 of the auxiliary cover 29. The first lock portion 61 includes a first lock groove 63. The first lock groove 63 extends downward from the upper end of the left lateral surface 57. The second lock portion 62 includes a second lock groove 64. The second lock groove 64 extends downward from the upper end of the right lateral surface 58.

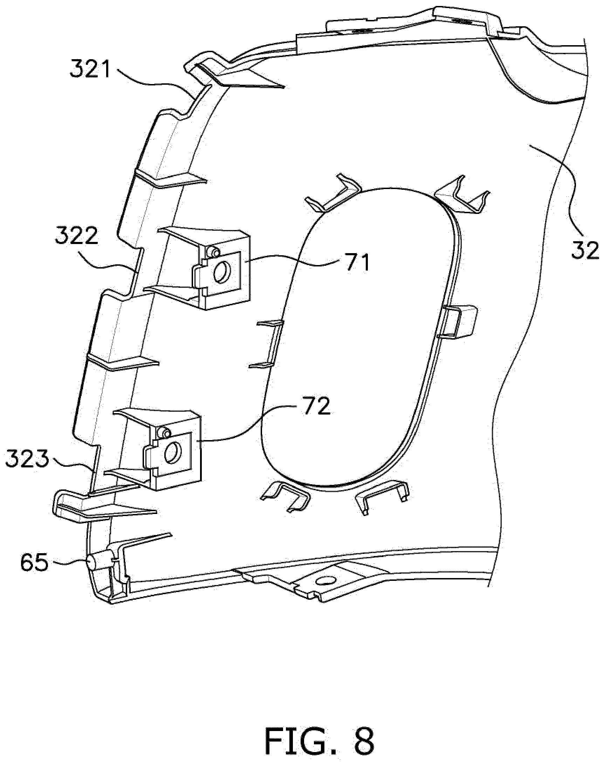

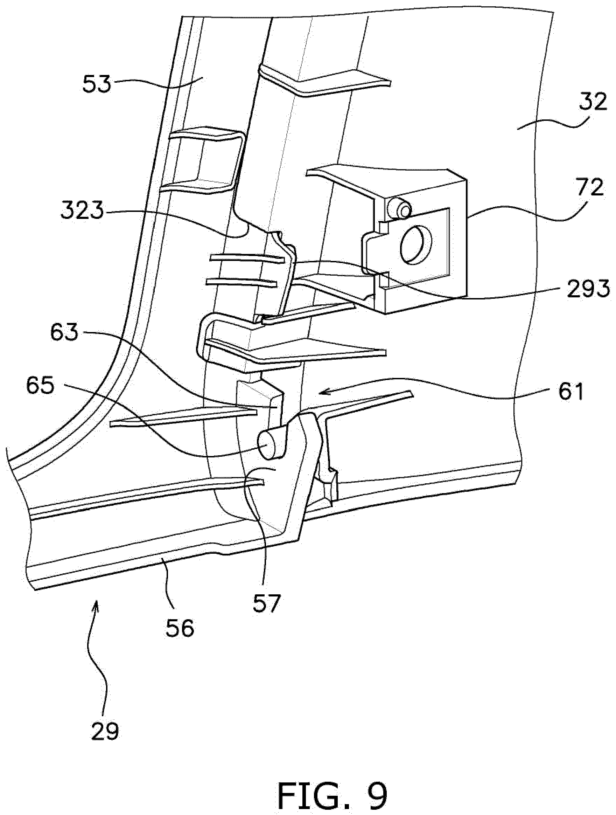

FIG. 8 is a view of the inner surface of the left side cover 32. As shown in FIG. 8, the left side cover 32 includes a first pin member 65. The first pin member 65 extends in the right-and-left direction. The first pin member 65 protrudes toward the auxiliary cover 29. FIG. 9 is a view of the inner surface of the left side cover 32 and that of the auxiliary cover 29. As shown in FIG. 9, the first pin member 65 is disposed in the first lock groove 63 so as to be locked thereto. The first pin member 65 is locked to the first lock groove 63, whereby the auxiliary cover 29 is attached to the left side cover 32.

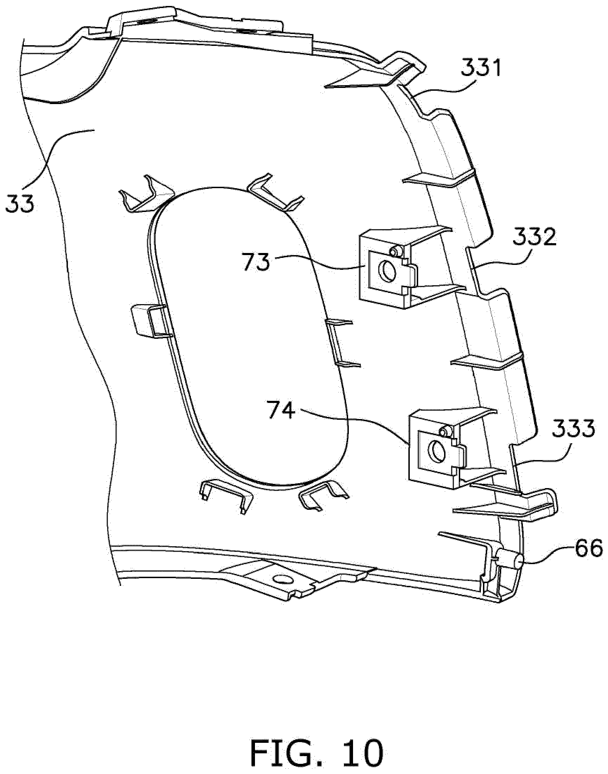

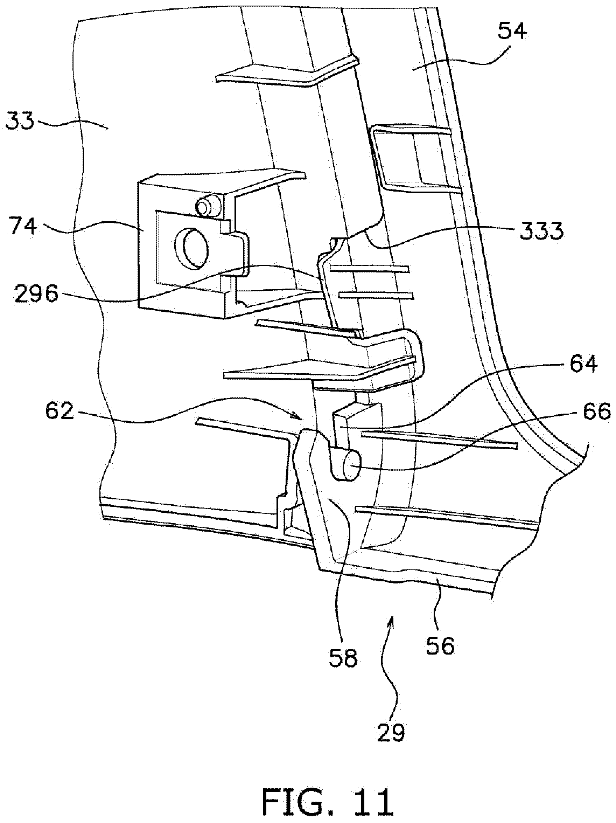

FIG. 10 is a view of the inner surface of the right side cover 33. FIG. 11 is a view of the inner surface of the right side cover 33 and that of the auxiliary cover 29. As shown in FIGS. 10 and 11, the right side cover 33 includes a second pin member 66. The second pin member 66 extends in the right-and-left direction. The second pin member 66 protrudes toward the auxiliary cover 29. The second pin member 66 is disposed in the second lock groove 64 so as to be locked thereto. The second pin member 66 is locked to the second lock groove 64, whereby the auxiliary cover 29 is attached to the right side cover 33.

As shown in FIG. 3, the first and second pin members 65 and 66 are located at an identical height to portion of the taillight lens 31. The first and second lock portions 61 and 62 are located at an identical height to portion of the taillight lens 31. As shown in FIG. 3, the first and second pin members 65 and 66 are located on a lower side than the lens body 41. The first and second lock portions 61 and 62 are located on a lower side than the lens body 41.

As shown in FIGS. 6 and 7, the auxiliary cover 29 includes holes 67 and 68. The holes 67 and 68 are disposed on a higher side than the middle hole 35. The holes 67 and 68 are provided in the top portion 55 of the auxiliary cover 29. Screws 69 and 70 shown in FIG. 3 are inserted through the holes 67 and 68. The auxiliary cover 29 is fixed to the rear cover 24 by the screws 69 and 70. Each screw 69, 70 is disposed such that the axis thereof is oriented in the up-and-down direction.

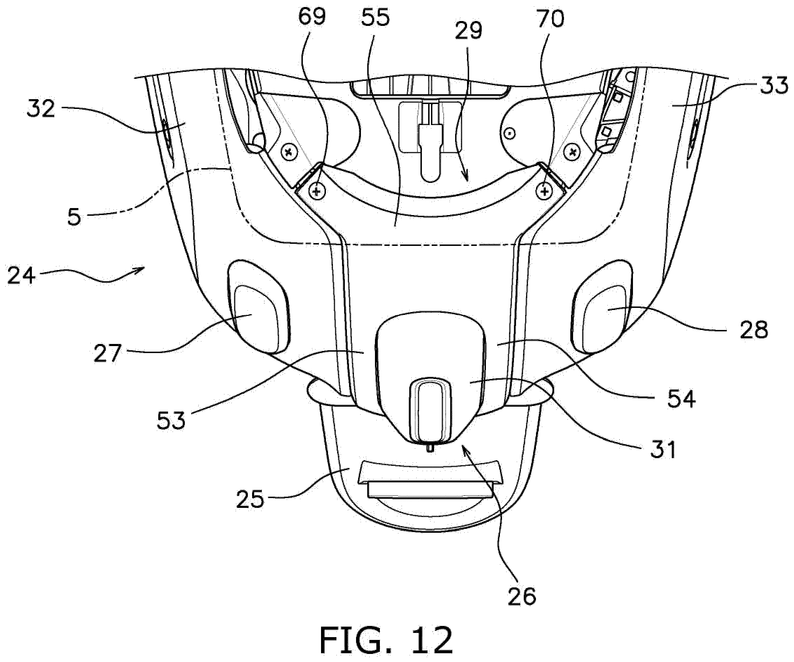

FIG. 12 is a top view of the rear portion of the straddled vehicle 1. In FIG. 12, the position of the seat 5 is depicted with dashed two-dotted line. As shown in FIG. 12, in the vehicle top view, the seat 5 overlaps with the screws 69 and 70. In other words, the seat 5 overlaps with each screw 69, 70 in the axial direction of each screw 69, 70.

The holes 67 and 68 includes a first hole 67 and a second hole 68. The screw 69, provided as a first screw, is inserted through the first hole 67. The first screw 69 fixes the auxiliary cover 29 to the left side cover 32. The screw 70, provided as a second screw, is inserted through the second hole 68. The second screw 70 fixes the auxiliary cover 29 to the right side cover 33.

As shown in FIGS. 6 and 7, the auxiliary cover 29 includes a plurality of left protrusions 291 to 293 and a plurality of right protrusions 294 to 296. The left protrusions 291 to 293 are disposed along the left lateral edge of the auxiliary cover 29. As shown in FIG. 8, the left side cover 32 includes a plurality of left cutouts 321 to 323. The left protrusions 291 to 293 are disposed in the left cutouts 321 to 323 so as to be locked thereto, respectively. The right protrusions 294 to 296 are disposed along the right lateral edge of the auxiliary cover 29. As shown in FIG. 10, the right side cover 33 includes a plurality of right cutouts 331 to 333. The right protrusions 294 to 296 are disposed in the right cutouts 331 to 333 so as to be locked thereto, respectively.

It should be noted that as shown in FIGS. 8 and 9, the left side cover 32 includes left attachment portions 71 and 72. The left attachment portions 71 and 72 are provided on the inner surface of the left side cover 32. The right side cover 33 includes right attachment portions 73 and 74. The right attachment portions 73 and 74 are disposed on the inner surface of the right side cover 33. The taillight housing 36 described above is attached to the left attachment portions 71 and 72 and the right attachment portions 73 and 74.

As shown in FIG. 3, the rear fender 25 includes plate attachment portions 75 for attaching a license plate. In the vehicle rear view, the plate attachment portions 75 are disposed below the taillight lens 31. As shown in FIG. 4, the taillight lens 31 is provided with an opening 76 in the bottom surface thereof. The opening 76 is disposed to be oriented downward. As shown in FIG. 5, the taillight unit 26 includes a license light lens 77. The license light lens 77 is attached to the taillight housing 36. The license light lens 77 is disposed in correspondence to the opening 76 of the taillight lens 31. The license light lens 77 causes the light emitted from the bulb 45 to transmit therethrough.

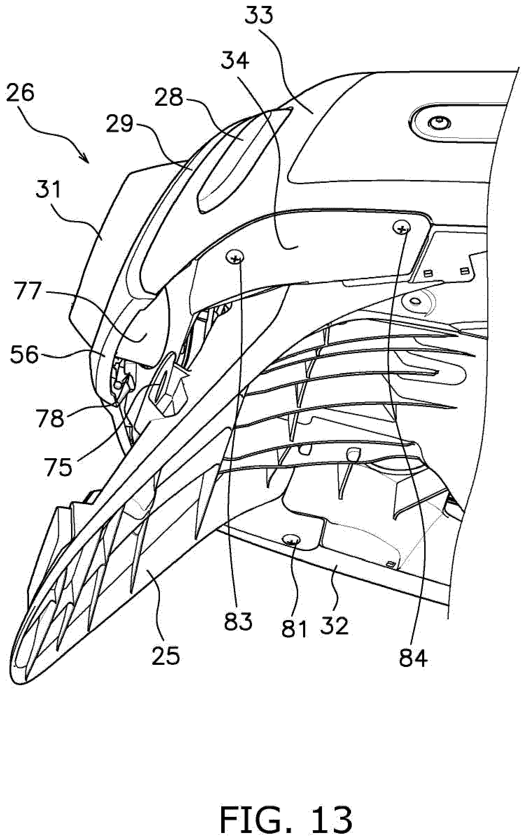

FIG. 13 is a view of the rear portion of the straddled vehicle 1 obliquely seen from below. As shown in FIG. 13, the bottom portion 56 of the auxiliary cover 29 is disposed rearwardly away from the bottom cover 34 through a gap 78. The gap 78 is disposed below the license light lens 77. The light emitted from the bulb 45 transmits through the license light lens 77 and the gap 78 to illuminate the plate attachment portions 75.

In the straddled vehicle 1 according to the present embodiment, the auxiliary cover 29 is detached from the rear cover 24, whereby replacement of the bulb 45 is enabled. When described in detail, first, the seat 5 is opened. Access to the screws 69 and 70 is thereby enabled; then, the screws 69 and 70 are removed with a tool. Next, the top portion 55 of the auxiliary cover 29 is circularly moved rearward about the pin members 65 and 66. Then, the auxiliary cover 29 is moved downward; whereby the auxiliary cover 29 is detached from the rear cover 24.

As shown in FIGS. 3 and 13, the bottom cover 34 is attached to the left side cover 32 and the right side cover 33 by screws 81 to 84. By removing the screws 81 to 84, the bottom cover 34 is detached from the left side cover 32 and the right side cover 33. Accordingly, the lens fastening portion 37 is exposed as shown in FIG. 4, whereby access to the lens fastening portion 37 is enabled. By removing the screws 38 and 39 of the lens fastening portion 37, the taillight lens 31 is removed from the taillight housing 36. Accordingly, the bulb 45 is exposed as shown in FIG. 5, whereby access to the bulb 45 is enabled.

In the straddled vehicle 1 according to the present embodiment, the lock portions 61 and 62 are locked to the side covers 32 and 33, respectively, whereby the auxiliary cover 29 is fixed to the rear cover 24. Because of this, unlike a configuration of fixing the auxiliary cover 29 by screws, bosses for such screws are not herein required to be provided on the inner side of the auxiliary cover 29. Accordingly, a space for disposing the taillight lens 31 is enlarged. As a result, increase in size of the taillight lens 31 is enabled.

The straddled vehicle 1 is not limited to the scooter, and alternatively, may be another type of vehicle such as a moped. The scope of present invention is defined by the appended claims. The structure of the taillight unit 26 is not limited to that in the embodiment described above and may be changed. For example, the shape of the taillight lens 31 is not limited to the oval shape, and alternatively, may be a vertically elongated polygonal shape. The shape of the auxiliary cover 29 is not limited to that in the embodiment described above and may be changed. Each lock portion 61, 62 is not limited to be made in structure of a groove, and alternatively, may be made in another structure of a protrusion, a hole, or so forth.

### REFERENCE SIGNS LIST

5: Seat, 24: Rear cover, 29: Auxiliary cover, 31: Taillight lens, 32: Left side cover, 33: Right side cover, 36: Taillight housing, 37: Lens fastening portion, 45: Bulb, 53: Left lateral portion, 54: Right lateral portion, 55: Top portion, 56: Bottom portion, 61: First lock portion, 63: First lock groove, 65: First pin member, 69: Screw, 75: Plate attachment portion, 78: Gap

## Claims

1. A straddled vehicle (1) comprising:
a rear cover (24) disposed in a vehicle rear portion with regard to a front-and-rear direction of the vehicle;
a taillight housing (36) attached to the rear cover (24);
a bulb (45) attached to the taillight housing (36);
a taillight lens (31) attached to the taillight housing (36), the taillight lens (31) covering the bulb (45), the taillight lens (31) is configured to cause light emitted from the bulb (45) to transmit therethrough;
a lens fastening portion (37) fixing the taillight lens (31) to the taillight housing (36); and
an auxiliary cover (29) disposed at least partially lateral to the taillight lens (31) with regard to a right-and-left direction of the vehicle in a vehicle rear view, the auxiliary cover (29) covering the lens fastening portion (37), wherein
the rear cover (24) includes at least one side cover (32, 33) disposed lateral to the auxiliary cover (29) with regard to the right-and-left direction of the vehicle in the vehicle rear view,
the auxiliary cover (29) includes at least one lock portion (61, 62) disposed lateral to the taillight lens (31) with regard to the right-and-left direction of the vehicle, **characterised in that**
the auxiliary cover (29) is attached to the rear cover (24) by locking the lock portion (61, 62) to the side cover (32, 33).

2. The straddled vehicle (1) according to claim 1, wherein the side cover (32, 33) includes a pin member (65, 66) protruding toward the auxiliary cover (29), and
the auxiliary cover (29) is attached to the side cover (32, 33) by locking the lock portion (61, 62) to the pin member (65, 66).

3. The straddled vehicle (1) according to claim 2, wherein the lock portion (61, 62) includes a lock groove (63, 64), and
the lock groove (63, 64) is locked onto the pin member (65, 66).

4. The straddled vehicle (1) according to any one of claims 1 to 3, wherein the taillight lens (31) has a vertically elongated shape with regard to an up-and-down direction of the vehicle.

5. The straddled vehicle (1) according to claim 4, wherein the taillight lens (31) has a vertically elongated oval shape with regard to the up-and-down direction of the vehicle.

6. The straddled vehicle (1) according to any one of claims 1 to 5, wherein the lock portion (61, 62) is located at an identical height to part of the taillight lens (31) with regard to the up-and-down direction of the vehicle.

7. The straddled vehicle (1) according to any one of claims 1 to 6, further comprising:
at least one screw (69, 70) disposed on an upper side than the lock portion (61, 62) with regard to the up-and-down direction of the vehicle, the screw (69, 70) fixing the auxiliary cover (29) to the rear cover (24).

8. The straddled vehicle (1) according to claim 7, further comprising:
a seat (5) disposed above the taillight lens (31) with regard to the up-and-down direction of the vehicle in the vehicle rear view, wherein
the seat (5) overlaps with the screw (69, 70) in an axial direction of the screw (69, 70).

9. The straddled vehicle (1) according to any one of claims 1 to 8, wherein the auxiliary cover (29) includes
a left lateral portion (53) disposed on the left of the taillight lens (31) with regard to the right-and-left direction of the vehicle in the vehicle rear view,
a right lateral portion (54) disposed on the right of the taillight lens (31) with regard to the right-and-left direction of the vehicle in the vehicle rear view,
a top portion (55) disposed above the taillight lens (31) with regard to the up-and-down direction of the vehicle in the vehicle rear view, the top portion (55) continuing to the left lateral portion (53) and the right lateral portion (54), and
a bottom portion (56) disposed below the taillight lens (31) with regard to the up-and-down direction of the vehicle in the vehicle rear view, the bottom portion (56) continuing to the left lateral portion (53) and the right lateral portion (54).

10. The straddled vehicle (1) according to any one of claims 1 to 9, further comprising:
an attachment portion (75) for a license plate, the attachment portion (75) disposed below the taillight lens (31) with regard to the up-and-down direction of the vehicle in the vehicle rear view, wherein
the rear cover (24) includes a bottom surface disposed below the taillight lens (31) with regard to the up-and-down direction of the vehicle,
the auxiliary cover (29) includes a bottom portion (56) disposed below the taillight lens (31) with regard to the up-and-down direction of the vehicle in the vehicle rear view, the bottom portion (56) of the auxiliary cover (29) is disposed rearwardly away from the bottom surface of the rear cover (24) through a gap (78) with regard to a front-and-rear direction of the vehicle,
the gap (78) is arranged such the light emitted from the bulb (45) transmits through the gap (78) to illuminate the attachment portion (75), and
the lock portion (61, 62) is located lateral to the gap (78) with regard to the right-and-left direction of the vehicle.

11. The straddled vehicle (1) according to any one of claims 1 to 10, comprising a left side cover (32) arranged on a left side of the vehicle and a right side cover (33) arranged on the right side of the vehicle with regard to the right-and-left direction of the vehicle in the vehicle rear view,
the auxiliary cover (29) includes a first lock portion (61) and a second lock portion (62) disposed lateral to the taillight lens (31) with regard to the right-and-left direction of the vehicle, respectively,
the auxiliary cover (29) is attached to the rear cover (24) by locking the related lock portion (61, 62) to the related side cover (32, 33).

12. The straddled vehicle (1) according to claim 11, wherein each of the side covers (32, 33) includes a pin member (65, 66) protruding toward the auxiliary cover (29), and the auxiliary cover (29) is attached to each of the side cover (32, 33) by locking the related lock portion (61, 62) to the related pin member (65, 66) of the related side cover (32, 33).

## Patentansprüche

1. Ein Spreiz-Sitz-Fahrzeug (1), das umfasst:
eine hintere Abdeckung (24), die in einem hinteren Abschnitt des Fahrzeugs in Bezug auf eine Vorder-und-Rück-Richtung des Fahrzeugs angeordnet ist;
ein Rücklichtgehäuse (36), das an der hinteren Abdeckung (24) angebracht ist;
eine Lampe (45), die am Rücklichtgehäuse (36) angebracht ist;
eine Rücklichtlinse (31), die an dem Rücklichtgehäuse (36) angebracht ist, die Rücklichtlinse (31) deckt die Lampe (45) ab, die Rücklichtlinse (31) ist konfiguriert ist, um zu bewirken, dass Licht, das von der Lampe (45) ausgestrahlt ist, durch sie hindurchgeht;
einen Linsenbefestigungsabschnitt (37), der die Rücklichtlinse (31) an dem Rücklichtgehäuse (36) befestigt; und
eine Zusatzabdeckung (29), die zumindest teilweise seitlich der Rücklichtlinse (31) in Bezug auf eine Rechts-und-Links-Richtung des Fahrzeugs in einer Fahrzeugrückansicht angeordnet ist, die Zusatzabdeckung (29) deckt den Linsenbefestigungsabschnitt (37) ab, wobei
die hintere Abdeckung (24) zumindest eine Seitenabdeckung (32, 33) enthält, die in der Rückansicht des Fahrzeugs in Rechts-und-Links-Richtung des Fahrzeugs seitlich zur Zusatzabdeckung (29) angeordnet ist,
die Zusatzabdeckung (29) zumindest einen Verriegelungsabschnitt (61, 62) enthält, der in Bezug auf die Rechts-und-Links-Richtung des Fahrzeugs seitlich an der Rücklichtlinse (31) angeordnet ist, **dadurch gekennzeichnet, dass**
die Zusatzabdeckung (29) an der hinteren Abdeckung (24) angebracht ist, indem das Verriegelungsabschnitt (61, 62) an der seitlichen Abdeckung (32, 33) verriegelt wird.

2. Das Spreiz-Sitz-Fahrzeug (1) gemäß Anspruch 1, wobei die Seitenabdeckung (32, 33) ein Stiftelement (65, 66) enthält, das in Richtung der Zusatzabdeckung (29) vorsteht, und
die Zusatzabdeckung (29) an der Seitenabdeckung (32, 33) durch Verriegelung des Verriegelungsabschnitts (61, 62) mit dem Stiftelement (65, 66) angebracht ist.

3. Das Spreiz-Sitz-Fahrzeug (1) gemäß Anspruch 2, wobei der Verriegelungsabschnitt (61, 62) eine Verriegelungsnut (63, 64) enthält, und
die Verriegelungsnut (63, 64) auf dem Stiftelement (65, 66) verriegelt ist.

4. Das Spreiz-Sitz-Fahrzeug (1) gemäß irgendeinem der Ansprüche 1 bis 3, wobei die Rücklichtlinse (31) in Bezug auf eine Auf-und-Ab-Richtung des Fahrzeugs eine vertikal verlängerte Form hat.

5. Das Spreiz-Sitz-Fahrzeug (1) gemäß Anspruch 4, wobei die Rücklichtlinse (31) eine vertikal langgestreckte ovale Form in Bezug auf die Auf-und-Ab-Richtung des Fahrzeugs hat.

6. Das Spreiz-Sitz-Fahrzeug (1) gemäß irgendeinem der Ansprüche 1 bis 5, wobei der Verriegelungsabschnitt (61, 62) in Bezug auf die Auf-und-Ab-Richtung des Fahrzeugs auf gleicher Höhe wie ein Teil der Rücklichtlinse (31) angeordnet ist.

7. Das Spreiz-Sitz-Fahrzeug (1) gemäß irgendeinem der Ansprüche 1 bis 6, das weiter umfasst:
zumindest eine Schraube (69, 70), die auf einer in Bezug auf die Auf-und-Ab-Richtung des Fahrzeugs oberen Seite des Verriegelungsabschnitts (61, 62) angeordnet ist, wobei die Schraube (69, 70) die Zusatzabdeckung (29) an der hinteren Abdeckung (24) befestigt.

8. Das Spreiz-Sitz-Fahrzeug (1) gemäß Anspruch 7, das weiter umfasst:
einen Sitz (5), der oberhalb der Rücklichtlinse (31) in Bezug auf die Auf-und-Ab-Richtung des Fahrzeugs in der Fahrzeugrückansicht angeordnet ist, wobei der Sitz (5) mit der Schraube (69, 70) in axialer Richtung der Schraube (69, 70) überlappt.

9. Das Spreiz-Sitz-Fahrzeug (1) gemäß irgendeinem der Ansprüche 1 bis 8, wobei die Zusatzabdeckung (29) enthält
einen linken seitlichen Abschnitt (53), der links von der Rücklichtlinse (31) in der Fahrzeugrückansicht in Bezug auf die Rechts-und-Links-Richtung angeordnet ist, einen rechten seitlichen Abschnitt (54), der rechts von der Rücklichtlinse (31) in der Fahrzeugrückansicht in Bezug auf die Rechts-und-Links-Richtung angeordnet ist, einen oberen Abschnitt (55), der oberhalb der Rücklichtlinse (31) in der Fahrzeugrückansicht in Bezug auf die Auf-und-Ab-Richtung des Fahrzeugs angeordnet ist, der obere Abschnitt (55) setzt sich in den linken seitlichen Abschnitt (53) und den rechten seitlichen Abschnitt (54) fort, und
einen unteren Abschnitt (56), der unterhalb der Rücklichtlinse (31) Fahrzeugrückansicht in Bezug auf die Auf-und-Ab-Richtung des Fahrzeugs angeordnet ist, der untere Abschnitt (56) setzt sich in den linken seitlichen Abschnitt (53) und den rechten seitlichen Abschnitt (54) fort.

10. Das Spreiz-Sitz-Fahrzeug (1) gemäß irgendeinem der Ansprüche 1 bis 9, das weiter umfasst:
einen Anbringungsabschnitt (75) für ein Nummernschild, wobei der Anbringungsabschnitt (75) in Bezug auf die Auf-und-Ab-Richtung des Fahrzeugs in der Fahrzeugrückansicht unterhalb der Rücklichtlinse (31) angeordnet ist, wobei die hintere Abdeckung (24) eine Bodenfläche enthält, die in Bezug auf die Auf-und-Ab-Richtung des Fahrzeugs unterhalb der Rücklichtlinse (31) angeordnet ist,
die Zusatzabdeckung (29) einen unteren Abschnitt (56) enthält, der in der Rückansicht des Fahrzeugs in Auf-und-Ab-Richtung des Fahrzeugs unterhalb der Rücklichtlinse (31) angeordnet ist,
der untere Abschnitt (56) der Zusatzabdeckung (29) durch einen Spalt (78) in Bezug auf eine Vorder-und-Rück-Richtung des Fahrzeugs nach hinten von der unteren Fläche der hinteren Abdeckung (24) weg angeordnet ist,
der Spalt (78) angeordnet ist, das dass das Licht, das von der Lampe (45) emittiert ist, durch den Spalt (78) hindurchtritt, um den Befestigungsabschnitt (75) zu beleuchten, und
der Verriegelungsabschnitt (61, 62) sich in Bezug auf die Rechts-und-Links-Richtung des Fahrzeugs seitlich des Spalts (78) befindet.

11. Das Spreiz-Sitz-Fahrzeug (1) gemäß irgendeinem der Ansprüche 1 bis 10, das umfasst eine linke Seitenabdeckung (32), die an einer linken Seite des Fahrzeugs angeordnet ist, und eine rechte Seitenabdeckung (33), die an der rechten Seite des Fahrzeugs in Bezug auf die Rechts-und-Links-Richtung des Fahrzeugs in der Fahrzeugrückansicht angeordnet ist,
die Zusatzabdeckung (29) enthält einen ersten Verriegelungsabschnitt (61) und einen zweiten Verriegelungsabschnitt (62), die in Bezug auf die Rechts-und-Links-Richtung des Fahrzeugs jeweils seitlich der Rücklichtlinse (31) angeordnet sind,
die Zusatzabdeckung (29) ist an der hinteren Abdeckung (24) durch Verriegeln des zugehörigen Verriegelungsabschnitts (61, 62) an der zugehörigen Seitenabdeckung (32, 33) angebracht.

12. Das Spreiz-Sitz-Fahrzeug (1) gemäß Anspruch 11, wobei jede der Seitenabdeckungen (32, 33) ein Stiftelement (65, 66) enthält, das in Richtung der Zusatzabdeckung (29) vorsteht, und
die Zusatzabdeckung (29) an jeder der Seitenabdeckungen (32, 33) durch Verriegeln des zugehörigen Verriegelungsabschnitts (61, 62) mit dem zugehörigen Stiftelement (65, 66) der zugehörigen Seitenabdeckung (32, 33) angebracht ist.

## Revendications

1. Véhicule à selle (1) comprenant :
un couvercle arrière (24) disposé au niveau d'une partie arrière du véhicule au regard d'une direction avant et arrière du véhicule ;
un boîtier de feu arrière (36) lié au couvercle arrière (24) ;
une ampoule (45) liée au boîtier de feu arrière (36) ;
une vitre de feu arrière (31) liée au boîtier de feu arrière (36), la vitre de feu arrière (31) recouvrant l'ampoule (45), la vitre de feu arrière (31) est configurée pour faire en sorte que la lumière émise depuis l'ampoule (45) soit transmise au travers ;
une partie de fixation de vitre (37) qui fixe la vitre de feu arrière (31) sur le boîtier de feu arrière (36) ; et
un couvercle auxiliaire (29) disposé au moins partiellement latéralement par rapport à la vitre de feu arrière (31) au regard d'une direction droite et gauche du véhicule selon une vue arrière du véhicule, le couvercle auxiliaire (29) recouvrant la partie de fixation de vitre (37), dans lequel
le couvercle arrière (24) inclut au moins un couvercle latéral (32, 33) disposé latéralement par rapport au couvercle auxiliaire (29) au regard de la direction droite et gauche du véhicule selon la vue arrière du véhicule, et
le couvercle auxiliaire (29) inclut au moins une partie de blocage (61, 62) disposée latéralement par rapport à la vitre de feu arrière (31) au regard de la direction droite et gauche du véhicule,
**caractérisé en ce que** le couvercle auxiliaire (29) est lié au couvercle arrière (24) en bloquant la partie de blocage (61, 62) sur le couvercle latéral (32, 33).

2. Véhicule à selle (1) selon la revendication 1, dans lequel le couvercle latéral (32, 33) inclut un élément de broche (65, 66) qui fait saillie en direction du couvercle auxiliaire (29) et le couvercle auxiliaire (29) est lié au couvercle latéral (32, 33) en bloquant la partie de blocage (61, 62) sur l'élément de broche (65, 66).

3. Véhicule à selle (1) selon la revendication 2, dans lequel la partie de blocage (61, 62) inclut une gorge de blocage (63, 64) et la gorge de blocage (63, 64) est bloquée sur l'élément de broche (65, 66).

4. Véhicule à selle (1) selon l'une quelconque des revendications 1 à 3, dans lequel la vitre de feu arrière (31) présente une forme allongée verticalement au regard d'une direction haut et bas du véhicule.

5. Véhicule à selle (1) selon la revendication 4, dans lequel la vitre de feu arrière (31) présente une forme ovale allongée verticalement au regard de la direction haut et bas du véhicule.

6. Véhicule à selle (1) selon l'une quelconque des revendications 1 à 5, dans lequel la partie de blocage (61, 62) est localisée à une hauteur identique par rapport à une partie de la vitre de feu arrière (31) au regard de la direction haut et bas du véhicule.

7. Véhicule à selle (1) selon l'une quelconque des revendications 1 à 6, comprenant en outre :
au moins une vis (69, 70) disposée sur un côté supérieur par rapport à la partie de blocage (61, 62) au regard de la direction haut et bas du véhicule, la vis (69, 70) fixant le couvercle auxiliaire (29) sur le couvercle arrière (24).

8. Véhicule à selle (1) selon la revendication 7, comprenant en outre :
un siège (5) disposé au-dessus de la vitre de feu arrière (31) au regard de la direction haut et bas du véhicule selon la vue arrière du véhicule, dans lequel
le siège (5) est en chevauchement avec la vis (69, 70) dans une direction axiale de la vis (69, 70).

9. Véhicule à selle (1) selon l'une quelconque des revendications 1 à 8, dans lequel le couvercle auxiliaire (29) inclut :
une partie latérale gauche (53) disposée sur la gauche de la vitre de feu arrière (31) au regard de la direction droite et gauche du véhicule selon la vue arrière du véhicule,
une partie latérale droite (54) disposée sur la droite de la vitre de feu arrière (31) au regard de la direction droite et gauche du véhicule selon la vue arrière du véhicule,
une partie de sommet (55) disposée au-dessus de la vitre de feu arrière (31) au regard de la direction haut et bas du véhicule selon la vue arrière du véhicule, la partie de sommet (55) se continuant jusqu'à la partie latérale gauche (53) et jusqu'à la partie latérale droite (54), et
une partie de fond (56) disposée au-dessous de la vitre de feu arrière (31) au regard de la direction haut et bas du véhicule selon la vue arrière du véhicule, la partie de fond (56) se continuant jusqu'à la partie latérale gauche (53) et jusqu'à la partie latérale droite (54).

10. Véhicule à selle (1) selon l'une quelconque des revendications 1 à 9, comprenant en outre :
une partie d'apposition (75) pour une plaque d'immatriculation, la partie d'apposition (75) étant disposée au-dessous de la vitre de feu arrière (31) au regard de la direction haut et bas du véhicule selon la vue arrière du véhicule, dans lequel
le couvercle arrière (24) inclut une surface de fond disposée au-dessous de la vitre de feu arrière (31) eu égard à la direction haut et bas du véhicule,
le couvercle auxiliaire (29) inclut une partie de fond (56) disposée au-dessous de la vitre de feu arrière (31) au regard de la direction haut et bas du véhicule selon la vue arrière du véhicule,
la partie de fond (56) du couvercle auxiliaire (29) est disposée à l'arrière à distance de la surface de fond du couvercle arrière (24) en en étant séparée par un espace (78) au regard d'une direction avant et arrière du véhicule,
l'espace (78) est agencé de telle sorte que la lumière émise depuis l'ampoule (45) soit transmise au travers de l'espace (78) pour éclairer la partie d'apposition (75), et
la partie de blocage (61, 62) est localisée latéralement par rapport à l'espace (78) au regard de la direction droite et gauche du véhicule.

11. Véhicule à selle (1) selon l'une quelconque des revendications 1 à 10, comprenant un couvercle latéral gauche (32) agencé sur un côté gauche du véhicule et un couvercle latéral droit (33) agencé sur le côté droit du véhicule au regard de la direction droite et gauche du véhicule selon la vue arrière du véhicule,
le couvercle auxiliaire (29) inclut une première partie de blocage (61) et une seconde partie de blocage (62) respectivement disposées latéralement par rapport à la vitre de feu arrière (31) au regard de la direction droite et gauche du véhicule,
le couvercle auxiliaire (29) est lié au couvercle arrière (24) en bloquant la partie de blocage concernée (61, 62) sur le couvercle latéral concerné (32, 33).

12. Véhicule à selle (1) selon la revendication 11, dans lequel chacun des couvercles latéraux (32, 33) inclut un élément de broche (65, 66) qui fait saillie en direction du couvercle auxiliaire (29), et le couvercle auxiliaire (29) est lié à chacun des couvercles latéraux (32, 33) en bloquant la partie de blocage concernée (61, 62) sur l'élément de broche concerné (65, 66) du couvercle latéral concerné (32, 33).
